# EUROPEAN PATENT APPLICATION

(11) **EP 4 286 611 A1**
(43) Date of publication of application: **06.12.2023**
(21) Application number: 23174569.6
(22) Date of filing: 22.05.2023
(51) Int. Cl.: E02F 9/26

(54) **WORK MACHINE CONTROL METHOD, WORK MACHINE CONTROL PROGRAM, WORK MACHINE CONTROL SYSTEM, AND WORK MACHINE**

(30) Priority: 01.06.2022 JP 2022089331
(71) Applicant: Yanmar Holdings Co., Ltd., Osaka-shi, Osaka (JP)
(72) Inventor: DANGUCHI, Masashi, Fukuoka (JP); TANAKA, Katashi, Fukuoka (JP); TAMURA, Kazuki, Fukuoka (JP)
(74) Representative: Novagraaf International SA

(57) **Abstract**

[Problem] To provide a work machine control method, a work machine control program, a work machine control system, and work machine that enable an operator to easily and intuitively recognize that a detection target is present in a monitoring area.

[Solution] The work machine control method includes acquiring captured images Im11, Im12, and Im 13 of a monitoring area around a work machine, and displaying a display screen Dp1 including the captured images Im11, Im12, and Im13 and a detection object Im10 on a display device. The work machine control method further includes displaying the detection object Im10 at an identical position on the display screen Dp1 regardless of a detection result of a detector that detects a detection target in the monitoring area, while changing a display mode of the detection object Im10 according to the detection result.

## Description

### TECHNICAL FIELD

The present invention relates to a work machine control method, a work machine control program, and a work machine control system that are used for a work machine having a function of detecting a detection target in a surrounding monitoring area, and a work machine.

### BACKGROUND ART

As a related technology, a work machine (excavator) provided with a work machine periphery monitoring system that monitors the periphery of the work machine is known (see, for example, Patent Document 1). The work machine according to the related technology displays, on a screen of a display device, a periphery monitoring image that is synthesized using captured images captured by each of a plurality of imaging devices attached to the work machine, and also displays a part of the periphery monitoring image in a relatively enlarged manner. If a person is present in the monitoring area around the work machine, the periphery monitoring system displays a yellow circle (or red circle) as a person detection marker at a position of a reference point corresponding to the person in the display screen (output image), and an area corresponding to that position is displayed in yellow (or red).

### PRIOR ART DOCUMENT

### PATENT DOCUMENT

Patent Document 1: Japanese Unexamined Patent Application Publication No. 2017-101420

### SUMMARY OF INVENTION

### TECHNICAL PROBLEM

In the related technology described above, due to the large amount of information displayed on the display device, it may be difficult for an operator to intuitively recognize that a detection target (for example, a person) is present in the monitoring area.

The purpose of the present invention is to provide a work machine control method, a work machine control program, a work machine control system, and a work machine that enable an operator to easily and intuitively recognize that a detection target is present in a monitoring area.

### SOLUTION TO PROBLEM

A work machine control method according to an aspect of the invention includes : acquiring a captured image of a monitoring area around a work machine; displaying a display screen including the captured image and a detection object, on a display device; and displaying the detection object at an identical position on the display screen regardless of a detection result of a detector that detects a detection target in the monitoring area, while changing a display mode of the detection object according to the detection result.

A work machine control program according to one aspect of the present invention is a program that causes one or more processors to execute the above-mentioned work machine control method.

A work machine control system according to one aspect of the present invention includes an image acquisition unit and a display processor. The image acquisition unit acquires a captured image of a monitoring area around a work machine. The display processor displays a display screen including the captured image and a detection object, on a display device. The display processor displays the detection object at an identical position on the display screen regardless of a detection result of a detector that detects a detection target in the monitoring area, while changing a display mode of the detection object according to the detection result.

A work machine according to one aspect of the present invention includes the work machine control system and a machine body on which the display device is installed.

### ADVANTAGEOUS EFFECTS OF INVENTION

According to the present invention, a work machine control method, a work machine control program, a work machine control system, and a work machine that enable an operator to easily and intuitively recognize that a detection target is present in a monitoring area can be provided.

### BRIEF DESCRIPTION OF DRAWINGS

FIG. 1 is a perspective view schematically illustrating an overall configuration of a work machine according to a first embodiment.
FIG. 2 is a diagram schematically illustrating a hydraulic circuit and the like of the work machine according to the first embodiment.
FIG. 3 is a plan view schematically illustrating a monitoring area and the like set around the work machine according to the first embodiment viewed from above the work machine.
FIG. 4 is a schematic external view of a display device on which a display screen is displayed by a work machine control system according to the first embodiment.
FIG. 5 is a diagram illustrating an example of the display screen displayed by the work machine control system according to the first embodiment.
FIG. 6 is a diagram illustrating examples of display modes of a detection object in the display screen displayed by the work machine control system according to the first embodiment.
FIG. 7 is a diagram illustrating a display example of a second region in the display screen displayed by the work machine control system according to the first embodiment.
FIG. 8 is a flowchart illustrating an operation example of the work machine control system according to the first embodiment.
FIG. 9 is a diagram illustrating a display example of the second region in the display screen displayed by the work machine control system according to a second embodiment.
FIG. 10 is a diagram illustrating a display example of the second region in the display screen displayed by the work machine control system according to the second embodiment.

### DESCRIPTION OF EMBODIMENTS

Embodiments of the present invention will be described below with reference to the accompanying drawings. The following embodiments are embodied examples of the present invention and are not intended to limit the technical scope of the present invention.

### (First Embodiment)

### [1] Overall Configuration

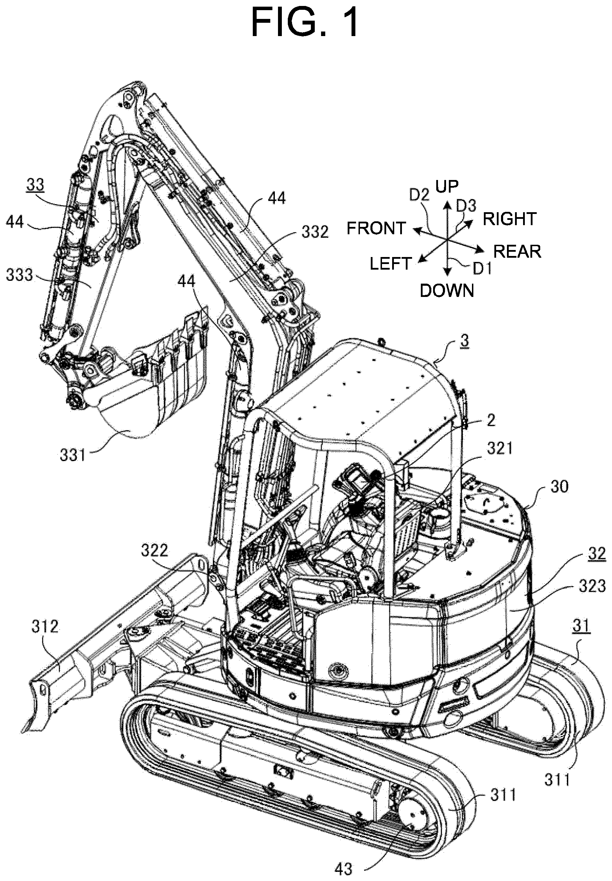

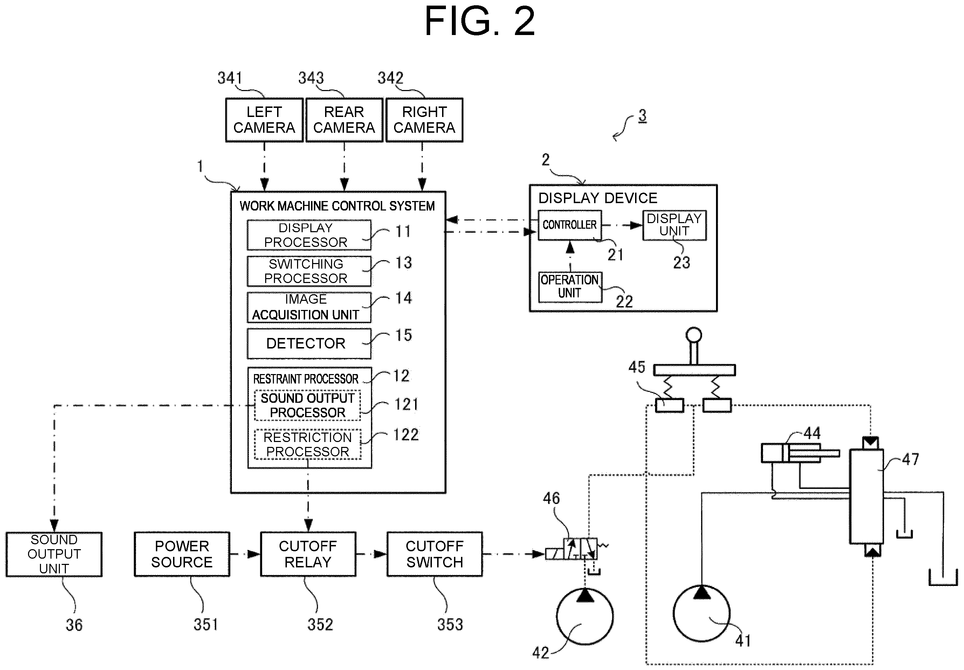

A work machine 3 according to the present embodiment includes a machine body 30 provided with a traveling part 31, a swivel part 32, and a work part 33, as illustrated in FIG. 1. The work machine 3 further includes a work machine control system 1 (hereinafter, simply referred to as a "control system 1"), as illustrated in FIG. 2. In addition, the machine body 30 further includes a display device 2 and an operation device.

The "work machine" referred to in the present disclosure refers to a machine for various types of work, and is, as an example, a work vehicle, such as a backhoe (including a hydraulic excavator and a mini excavator), a wheel loader and a carrier. The work machine 3 includes the work part 33 configured to be capable of performing one or more types of work including at least lifting work. The work machine 3 is not limited to a "vehicle" but may be, for example, a work vessel or a flying work body, such as a drone or a multicopter. Furthermore, the work machine 3 is not limited to a construction machine (construction equipment), but may also be an agricultural machine (agricultural equipment), such as a rice transplanter, a tractor, or a combine harvester. In the present embodiment, unless otherwise specified, a case where the work machine 3 is a backhoe with a lifting function (with a crane function) and can perform excavation work, ground leveling work, trenching work, or loading work as well as lifting work is taken as an example.

Moreover, for convenience of explanation, a vertical direction in a state where the work machine 3 is usable is defined as an up-down direction D1 in the present embodiment. Furthermore, a front-rear direction D2 and a left-right direction D3 are each defined based on a direction viewed from a user (operator) seated on (a driving part 321 of) the work machine 3 in a non-swiveling state of the swivel part 32. In other words, each of the directions used in the present embodiment is a direction defined based on the machine body 30 of the work machine 3, and a direction in which the machine body 30 moves at the time of the work machine 3 moving forward is referred to as "front", and a direction in which the machine body 30 moves at the time of the work machine 3 moving rearward is referred to as "rear". Similarly, a direction in which a front end portion of the machine body 30 moves at the time of the work machine 3 swinging to right is referred to as "right", and a direction in which the front end portion of the machine body 30 moves at the time of the work machine 3 swinging to left is referred to as "left". However, these directions are not intended to limit a use direction (direction in use) of the work machine 3.

The work machine 3 includes an engine serving as a power source. In the work machine 3, the engine drives a hydraulic pump 41 (see FIG. 2), for example, and hydraulic oil is supplied from the hydraulic pump 41 to hydraulic actuators (including a hydraulic motor 43 and a hydraulic cylinder 44) of each part of the machine body 30, thereby to drive the machine body 30. The work machine 3 is controlled, for example, by the user (operator), who is seated in the driving part 321 of the machine body 30, operating an operation lever and the like of the operation device.

It is assumed in the present embodiment that the work machine 3 is a passenger-use backhoe as described above, and therefore, the work part 33 is driven in accordance with an operation by the user (operator) seated in the driving part 321 so as to perform work such as excavation work. The driving part 321 in which the user is seated is provided at the swivel part 32.

The traveling part 31 has a traveling function, and is so configured as to be capable of traveling (including swiveling) on the ground. The traveling part 31 includes, for example, a pair of right and left crawlers 311 and a blade 312. The traveling part 31 further includes the hydraulic motor 43 (hydraulic actuator) for traveling to drive the crawlers 311.

The swivel part 32 is disposed above the traveling part 31, and is so configured as to be swingable, relative to the traveling part 31, about a rotation shaft along the vertical direction. The swivel part 32 has a hydraulic motor (hydraulic actuator) for swiveling, and the like. The swivel part 32 includes, in addition to the driving part 321, the engine and the hydraulic pump 41. At a front end portion of the swivel part 32, there is provided a boom bracket 322 to which the work part 33 is attached.

The work part 33 is so configured as to be capable of performing work, including lifting work. The work part 33 is supported by the boom bracket 322 of the swivel part 32, and performs work. The work part 33 includes a bucket 331, a boom 332, and an arm 333. The work part 33 further includes the hydraulic actuators (including the hydraulic cylinder 44 and a hydraulic motor) for driving each portion.

The bucket 331 is a type of attachment (work instrument) that is attached to the machine body 30 of the work machine 3, and that is composed of an optional instrument selected from among a plurality of types of attachments according to content of the work. The bucket 331, as an example, is removably attached to the machine body 30 and is replaced according to the content of the work. In addition to the bucket 331, attachments for the work machine 3 include various instruments, such as a breaker, an auger, a crusher, a fork, a fork claw, a steel cutter, an asphalt cutter, a mower, and a ripper, a mulcher, a tilt rotator, and a tamper. The work part 33 performs work by driving the bucket 331 with power from the driving device.

The boom 332 is supported by the boom bracket 322 of the swivel part 32 in a rotatable manner. Specifically, the boom 332 is supported at the boom bracket 322 in a rotatable manner about a rotation shaft along a horizontal direction. The boom 332 is so shaped as to extend upward from a base end portion supported by the boom bracket 322. The arm 333 is coupled to a tip end of the boom 332. The arm 333 is supported to the boom 332 in a rotatable manner about a rotation shaft along the horizontal direction. The bucket 331 is attached to a tip end of the arm 333.

The work part 33 moves under power from the engine as the power source. Specifically, the engine drives the hydraulic pump 41 thereby to supply hydraulic oil from the hydraulic pump 41 to the hydraulic actuator (hydraulic cylinder 44 or the like) of the work part 33, thereby to move each of the portions (bucket 331, boom 332, and arm 333) of the work part 33.

In the present embodiment, the work part 33, in particular, has an articulated configuration in which the boom 332 and the arm 333 are individually rotatable. That is, the boom 332 and the arm 333 rotate about the respective rotation shafts extending along the horizontal direction so that the articulated work part 33 including the boom 332 and the arm 333 is capable of performing extending and folding movements as a whole.

Each of the traveling part 31 and the swivel part 32, as well as the work part 33, moves under power from the engine as the power source. In other words, hydraulic oil is supplied from the hydraulic pump 41 to the hydraulic motor 43 of the traveling part 31, a hydraulic motor of the swivel part 32, and the like, thereby to move the swivel part 32 and the traveling part 31.

The engine functions as a power source that supplies power to each part as described above. Here, the engine as well as the hydraulic pump 41 and the like are installed in the swivel part 32. As an example in the present embodiment, the engine is a diesel engine. The engine is driven by fuel (herein, light oil) supplied from a fuel tank.

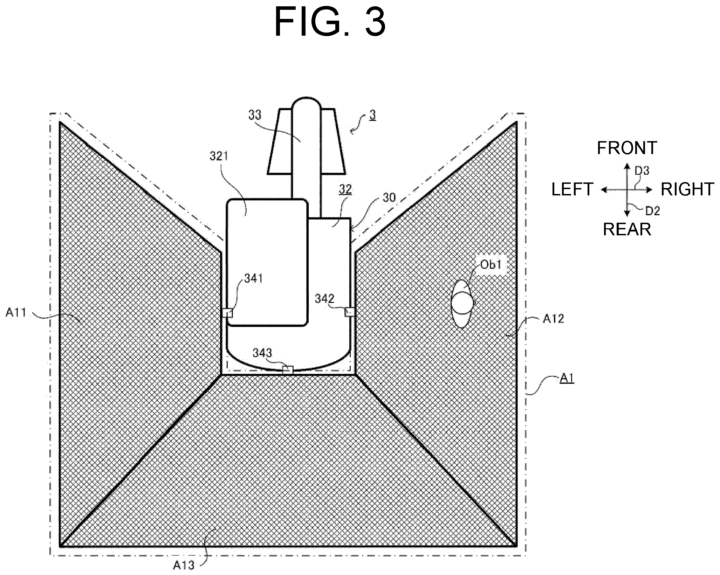

Here, the machine body 30 is provided with various types of sensors (including cameras) that detect a detection target Ob1 (see FIG. 3) in a monitoring area A1 (see FIG. 3) around the work machine 3, such as a camera for capturing an image around the machine body 30. As an example in the present embodiment, as illustrated in FIG. 3, a plurality of cameras (herein, three cameras), including a left camera 341, a right camera 342, and a rear camera 343, are installed on the swivel part 32 of the machine body 30. The left camera 341, the right camera 342, and the rear camera 343 are connected to a control system 1 and output, to the control system 1, images captured by each of the cameras. FIG. 3 is a plan view of the work machine 3 viewed from above, schematically illustrating the monitoring area A1 set around the work machine 3, the detection target Ob1, and the machine body 30 of the work machine 3 (including the left camera 341, the right camera 342, and the rear camera 343).

The left camera 341, the right camera 342, and the rear camera 343 are placed to face left, right, and rear, respectively, based on the driving part 321 so as to capture images of the monitoring area A1 on left, right, and rear viewed from the operator seated in the driving part 321 of the swivel part 32. In other words, as illustrated in FIG. 3, the monitoring area A1 includes a plurality of (herein, three) small areas A11, A12, and A13, and the left camera 341 captures an image of the small area A11 (left area) which is on the left as seen from the operator seated in the driving part 321. Similarly, the right camera 342 captures an image of the small area A12 (right area) which is on the right as seen from the operator seated in the driving part 321, and the rear camera 343 captures an image of the small area A13 (rear area) which is at the rear as seen from the operator seated in the driving part 321. This enables the left camera 341, the right camera 342, and the rear camera 343 to cover the both sides (left and right) and the rear which are often blind spots for the operator.

In FIG. 2, a hydraulic circuit and an electric circuit (electric connections) of the work machine 3 according to the present embodiment are schematically illustrated. In FIG. 2, solid lines represent highpressure oil paths (for hydraulic oil), dotted lines represent low-pressure oil paths (for pilot oil), and dashed-dotted line arrows represent electric signal paths.

As illustrated in FIG. 2, the work machine 3 includes a pilot pump 42, a remote control valve 45, a control valve 46, and a direction switching valve (control valve) 47, in addition to the hydraulic pump 41, the hydraulic motor 43 (omitted in FIG. 2), and the hydraulic cylinder 44.

The hydraulic oil is supplied from the hydraulic pump 41 driven by the engine to the hydraulic motor 43 of the traveling part 31, the hydraulic motor of the swivel part 32, the hydraulic cylinder 44 of the work part 33, and the like. In this way, the hydraulic actuators such as the hydraulic motor 43 and the hydraulic cylinder 44 are driven.

Each of the hydraulic actuators, such as the hydraulic motor 43 and the hydraulic cylinder 44, includes the pilot-type direction switching valve 47 capable of changing a direction and a flow rate of the hydraulic oil supplied from the hydraulic pump 41. The direction switching valve 47 is driven when pilot oil serving as an input instruction is supplied from the pilot pump 42.

Here, the remote control valve 45 is provided, for example, in a supply path of the pilot oil to the direction switching valve 47 corresponding to the hydraulic cylinder 44 of the work part 33. The remote control valve 45 outputs a work operation instruction of the work part 33 in response to an operation of the operation lever. The work operation instruction instructs an expanding movement, a contracting movement and the like of the work part 33. An electromagnetic control valve 46 (solenoid valve) is inserted between the remote control valve 45 and the pilot pump 42. The control valve 46 is connected via the cutoff relay 352 and the cutoff switch 353 to the power source 351 and operates according to current supplied from the power source 351.

Similarly, a remote control valve is also provided in a supply path of the pilot oil to a direction switching valve corresponding to the hydraulic motor 43 of the traveling part 31. This remote control valve outputs a traveling operation instruction of the traveling part 31 in response to an operation of the operation lever. The travel operation instruction instructs a travel movement (for example, forward movement or backward movement) of the traveling part 31. Further, a remote control valve is also provided in a supply path of the pilot oil to a direction switching valve corresponding to the hydraulic motor of the swivel part 32. This remote control valve outputs a swivel operation instruction of the swivel part 32 in response to an operation of the operation lever. The swivel operation instruction instructs a swivel movement (for example, left swivel or right swivel) of the swivel part 32. The electromagnetic control valve 46 (solenoid valve) is also inserted between these remote control valves and the pilot pump 42. The control valve 46 is connected via the cutoff relay 352 and the cutoff switch 353 to the power source 351 and operates according to current supplied from the power source 351.

The control valve 46 opens the flow path of the pilot oil from the pilot pump 42 to the remote control valve 45 while the control valve 46 is energized, that is, in a state where current is supplied, and shuts off the flow path of the pilot oil while the control valve 46 is de-energized, that is, in a state where supply current is cut off. Therefore, when the supply current to the control valve 46 is cut off, the hydraulic actuator corresponding to the remote control valve 45 cannot be driven, and thus output of the hydraulic actuator is forcibly stopped regardless of an operation of the operation lever.

Here, the cutoff relay 352 is connected to the control system 1 and is switched between on and off in response to a control signal (electric signal) supplied from the control system 1. The cutoff switch 353 is switched between on and off in response to an operation of a cutoff lever, for example, the cutoff switch 353 is turned on when the cutoff lever is operated downward. Therefore, when both the cutoff relay 352 and the cutoff switch 353 are on, the control valve 46 becomes energized and the flow path of the pilot oil from the pilot pump 42 to the remote control valve 45 is opened so that the hydraulic actuator is driven in response to an operation of the operation lever. On the other hand, when at least one of the cutoff relay 352 and the cutoff switch 353 is in an off state, the control valve 46 is de-energized and the flow path of the pilot oil is shut off so that the hydraulic actuator cannot be driven.

For example, when at least one of the cutoff relay 352 and the cutoff switch 353 that are connected to the control valve 46 inserted between the remote control valve corresponding to the hydraulic motor of the swivel part 32 and the pilot pump 42 is in an off state, the hydraulic motor of the swivel part 32 cannot be driven. In this state, output of the hydraulic actuator (hydraulic motor of the swivel part 32) is forcibly stopped regardless of an operation of the operation lever, and therefore, a swivel movement of the swivel part 32 is prohibited.

The control system 1 is mainly configured by a computer system having one or more processors such as a Central Processing Unit (CPU) and one or more memories such as a Read Only Memory (ROM) and a Random Access Memory (RAM), executing various processes (information process). In the present embodiment, the control system 1 is an integrated control unit that controls the overall work machine 3, and includes, for example, an electronic control unit (ECU). However, the control system 1 may be provided separately from the integrated controller. The control system 1 will be described in detail in the column "[2] Configuration of Control System".

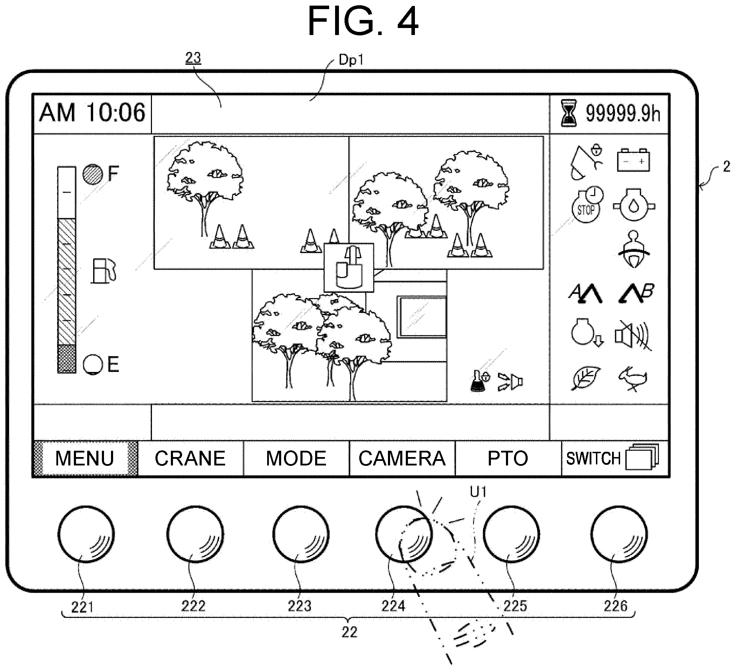

The display device 2 is placed at the driving part 321 of the machine body 30 and is a user interface for receiving an operation input by the user (operator) and outputting various information to the user. The display device 2 outputs an electric signal that accords to the operation by the user, for example, thereby to receive various operations by the user. Accordingly, the user (operator) can view a display screen Dp1 (see FIG. 4) displayed on the display device 2, and also can operate the display device 2 as necessary.

As illustrated in FIG. 2, the display device 2 includes a controller 21, an operation unit 22, and a display unit 23. The display device 2 is so configured as to be communicable with the control system 1, and can execute sending and receiving of data to and from the control system 1. As an example in the present embodiment, the display device 2 is a dedicated device used in the work machine 3.

The controller 21 controls the display device 2 in accordance with data from the control system 1. Specifically, the controller 21 outputs the electric signal that accords to the user's operation received by the operation unit 22, and displays, on the display unit 23, the display screen Dp1 generated by the control system 1.

The operation unit 22 is a user interface for receiving an operation input by the user (operator) to the display screen Dp1 displayed on the display unit 23. The operation unit 22 outputs the electric signal that accords to an operation of a user U1 (see FIG. 4), for example, thereby to receive various operations by the user U1. As an example in the present embodiment, the operation unit 22 includes a plurality of (herein, six) mechanical push button switches 221 to 226, as illustrated in FIG. 4. Along a periphery of a display area of the display unit 23, the plurality of push button switches 221 to 226 are placed in the vicinity of the display area (a lower portion in the example in FIG. 4). The plurality of push button switches 221 to 226 are associated with after-described items displayed on the display screen Dp1, and when any of the plurality of push button switches 221 to 226 is operated, a corresponding one of the items displayed on the display screen Dp1 is operated (selected).

Furthermore, the operation unit 22 may include a touch panel and an operation dial. Also in this case, any of the items displayed on the display screen Dp1 is operated (selected) by an operation performed on the operation unit 22.

The display unit 23 is a user interface for displaying information to the user U1 (operator), such as a liquid crystal display or an organic EL display that displays various types of information. The display unit 23 presents various types of information to the user by means of display. As an example in the present embodiment, the display unit 23 is a full-color liquid crystal display with a backlight and has a "horizontally-long" display area that is long in a transverse direction as illustrated in FIG. 4.

The display device 2 presents various information on the display screen Dp1 to the user U1 (operator) who operates the work machine 3. In other words, the user U1 who operates the work machine 3 can visually obtain various information related to the work machine 3 by viewing the display screen Dp1 displayed on the display device 2. As an example, the display device 2 displays information on an operating state of the work machine 3, such as a cooling water temperature and a hydraulic oil temperature, so that the user U1 can check, at the display device 2, the information that is necessary for operating the work machine 3 and that is on the operating state of the work machine 3. The display device 2 can also display on the display screen Dp1 images of the areas around the work machine 3 (images of the monitoring area A1) captured by the left camera 341, the right camera 342, and the rear camera 343. Thus, when operating the work machine 3, the user U1 (operator) can check, on the display screen Dp1 displayed on the display device 2, the situations at the work machine 3's sides and rear which are likely to be blind spots from the driving part 321, for example.

Furthermore, the work machine 3 includes the sound output unit 36 (see FIG. 2) that outputs sound (including voice) to the user U1 (operator). The sound output unit 36 includes a buzzer or a speaker and outputs sound upon receiving an electric signal. The sound output unit 36 is connected to the control system 1, and outputs the sound, such as a beep or a voice, according to a sound control signal from the control system 1. In the present embodiment, the sound output unit 36, as well as the display device 2, is provided at the driving part 321 of the machine body 30. The sound output unit 36 may be provided integrally with the display device 2.

In addition to the above-mentioned components, the machine body 30 further includes the operation lever, a cutoff lever, a communication terminal, a fuel tank, and a battery. The machine body 30 further includes sensors to monitor an operating condition of the machine body 30, such as a cooling water temperature sensor, a hydraulic oil temperature sensor, a tachometer that measures an engine speed, and an hour meter that measures an operating time. Moreover, the machine body 30 includes other sensors that detect states of a cutoff lever, a starter key switch, and the like.

### [2] Configuration of Control System

Next, a configuration of the control system 1 according to the present embodiment will be described with reference to FIG. 2. The control system 1 controls the display device 2 to display the display screen Dp1 on the display device 2. In the present embodiment, the display device 2 is installed on the machine body 30 of the work machine 3 as described above. The control system 1 is a component of the work machine 3, and is included in the work machine 3 together with the machine body 30 and the like. In other words, the work machine 3 according to the present embodiment includes at least the control system 1 and the machine body 30 (including the traveling part 31, the swivel part 32, and the work part 33) on which the display device 2 is installed.

A "screen", such as the display screen Dp1 in the present disclosure, refers to an image (picture) displayed on the display device 2 and includes graphic images, figures, photographs, text, and moving images. That is, the control system 1 can display, on the display device 2, the display screen Dp1 including a graphic image representing information on the operating state of the work machine 3, such as the cooling water temperature and the hydraulic oil temperature, for example. Here, when the display screen Dp1 includes a moving image or the like, the display screen Dp1 does not include a constant image but includes an image that changes from moment to moment.

As illustrated in FIG. 2, the control system 1 includes a display processor 11, a restraint processor 12, a switching processor 13, an image acquisition unit 14, and a detector 15. As an example in the present embodiment, the control system 1 is mainly constituted by a computer system having one or more processors, and the plurality of functional units (display processor 11 and the like) are realized when the one or more processors execute a work machine control program. The plurality of functional units included in the control system 1 may be distributed to a plurality of housings or may be included in a single housing.

The control system 1 is so configured as to be communicable with devices included in each part of the machine body 30. In other words, at least the display device 2, the sound output unit 36, the cutoff relay 352, the left camera 341, the right camera 342, and the rear camera 343 are connected to the control system 1. Accordingly, the control system 1 can control the display device 2, the sound output unit 36, and the like, controls the cutoff relay 352 to control the control valve 46, and obtain captured images from the left camera 341, the right camera 342, the rear camera 343, and the like. Here, the control system 1 may send and receive various types of information (data) directly to and from each device, or indirectly through a repeater or the like.

The image acquisition unit 14 executes an image acquisition process of acquiring the captured images of the monitoring area A1 around the work machine 3. In the present embodiment, the image acquisition unit 14 regularly or irregularly acquires outputs of the left camera 341, the right camera 342 and the rear camera 343 from the left camera 341, the right camera 342 and the rear camera 343. In other words, the image acquisition unit 14 acquires image data (captured images) of the monitoring area A1 (respective small areas A11, A12, and A13) around the work machine 3. The data acquired by the image acquisition unit 14 is stored in a memory, for example.

The detector 15 detects the detection target Ob1 in the monitoring area A1 around the work machine 3. In other words, the detector 15 determines presence or absence (existence or nonexistence) of the detection target Ob1 in the monitoring area A1, and outputs a detection result indicating whether or not the detection target Ob1 is present in the monitoring area A1. As an example in the present embodiment, the detection target Ob1 is a "person". In other words, when a "person" enters the monitoring area A1 around the work machine 3 as a result of a movement of the work machine 3 or a movement of the "person" around the work machine 3, the detector 15 detects the "person" as the detection target Ob1. When a plurality of detection targets Ob1 are present in the monitoring area A1, the detector 15 may also detect the number of detection targets Ob1 (the number of persons).

In the present embodiment, the detector 15 detects the detection target Ob1 in the monitoring area A1 based on outputs (image data) of the left camera 341, the right camera 342, and the rear camera 343. Specifically, the detector 15 extracts a feature value in an image by performing the image process on the image data acquired by the image acquisition unit 14, and determines whether or not the detection target Ob1 ("person" in the present embodiment) is reflected in the image based on the feature value. Here, when the detection target Ob1 is reflected in the image, the detector 15 determines the detection target Ob1 is reflected in the image captured by which of the left camera 341, the right camera 342 and the rear camera 343. In other words, the detector 15 distinguishes that the detection target Ob1 is present in which of the small area A11 captured by the left camera 341, the small area A12 captured by the right camera 342, and the small area A13 captured by the rear camera 343, thereby to detect the detection target Ob1.

The restraint processor 12 executes a restraint process of restraining a movement of the work machine 3 based on the detection result of the detector 15. In the present embodiment, when the detection result of the detector 15 is a result indicating a presence of the detection target Ob1 (herein, a person) in the monitoring area A1, the restraint processor 12 executes the restraint process. The "restraint process" referred to in the present disclosure refers to a process that acts to restrain in some way a movement of the work machine 3. As an example, the restraint process includes a process of indirectly restraining a movement of the work machine 3 by warning the user U1 (operator) who operates the work machine 3 by means of sound or light (including display). Furthermore, the restraint process includes a process of directly restraining a movement of the work machine 3 by controlling the traveling part 31, the swivel part 32, and the work part 33 of the work machine 3.

In the present embodiment, the restraint processor 12 includes a sound output processor 121 and a restriction processor 122.

The sound output processor 121 controls the sound output unit 36 to output a notification sound when the detection target Ob1 is present in the monitoring area A1. Specifically, in the present embodiment, the restraint process includes a sound output process of outputting a notification sound. The notification sound may be a simple beep or a voice, such as a message "Please be careful". Furthermore, the notification sound may be changed depending on the detection result of the detector 15 (such as a distance from the machine body 30 to the detection target Ob1). Accordingly, since a movement of the work machine 3 may be indirectly restrained by warning the user U1 (operator) who operates the work machine 3 with a notification sound, a high degree of freedom in operating of the work machine 3 is realized. That is, when the user U1 operates the work machine 3 paying attention to the detection target Ob1, a movement of the work machine 3 can be continued while contact with the detection target Ob1 is avoided.

When the detection target Ob1 is present in the monitoring area A1, the restriction processor 122 controls the cutoff relay 352 so as to turn off the cutoff relay 352. Therefore, the control valve 46 connected to the power source 351 via the cutoff relay 352 is de-energized, and output of the hydraulic actuator corresponding to the control valve 46 is forcibly stopped. Specifically, in the present embodiment, the restraint process includes a restriction process of restricting a movement of the work machine 3. The "restriction process" referred to in the present disclosure refers to a process that acts to restrict in some way a movement of the work machine 3. As an example, the restriction process includes a process of prohibiting (disabling) the travel movement of the traveling part 31, a process of prohibiting (disabling) the swivel movement of the swivel part 32, and a process of prohibiting (disabling) the movement of the work part 33. Accordingly, a movement of the work machine 3 may be forcibly restricted regardless of an operation by the user U1 (operator). That is, contact between the machine body 30 and the detection target Ob1 caused by the movement of the work machine 3 can be avoided.

Here, the restriction process executed by the restriction processor 122 includes at least a process of restricting the swivel movement of the swivel part 32. Specifically, the restriction processor 122 is configured capable of controlling the cutoff relay 352 coupled to the control valve 46 corresponding to the hydraulic motor of the swivel part 32, and turns off the cutoff relay 352 when the detection target Ob1 is present in the monitoring area A1. Accordingly, in the case where the detection target Ob1 is present in the monitoring area A1, the hydraulic motor of the swivel part 32 cannot be driven, the swivel part 32 comes to an emergency stop when the swivel part 32 is in a swivel movement, and the swivel movement of the swivel part 32 is prohibited when the swivel part 32 is not in a swivel movement. Specifically, in the present embodiment, the work machine 3 includes the traveling part 31 and the swivel part 32 which is capable of swiveling with respect to the traveling part 31. The restriction process at least restricts the swivel movement of the swivel part 32. Accordingly, contact between the machine body 30 and the detection target Ob1 caused by swiveling of the swivel part 32 can be avoided, when the detection target Ob1 is present in the monitoring area A1 which is a blind spot for the user U1 (operator).

The switching processor 13 switches between an enabled state and a disabled state of the restraint processor 12. In other words, the switching processor 13 switches between an enabled state and a disabled state of a function associated with the restraint process. In short, the restraint processor 12 is not always enabled, but can be switched between an enabled state and a disabled state. In a case where the restraint processor 12 is enabled, the restraint processor 12 executes the restraint process when the detection target Ob1 is present in the monitoring area A1. On the other hand, in a case where the restraint processor 12 is disabled, the restraint processor 12 does not execute the restraint process even when the detection target Ob1 is present in the monitoring area A1.

As an example in the present embodiment, the switching between an enabled state and a disabled state of the function (restraint processor 12) associated with the restraint process is performed by the user U1 (operator) who operates the display device 2. In other words, when the user U1 operates the operation unit 22 of the display device 2 to enable the function associated with the restraint process, the switching processor 13 enables the function associated with the restraint process in response to the operation. On the other hand, when the user U1 operates the operation unit 22 of the display device 2 to disable the function associated with the restraint process, the switching processor 13 disables the function associated with the restraint process in response to the operation.

Furthermore, in the present embodiment, the restraint process executed by the restraint processor 12 includes the sound output process executed by the sound output processor 121 and the restriction process executed by the restriction processor 122. Thus, the restraint process includes a plurality of specific processes (the sound output process, the restriction process, etc.) to restrain the movement of the work machine 3. Here, the restraint process can be individually switched between an enabled state and a disabled state for each specific process. In other words, the switching processor 13 can individually perform switching between an enabled state and a disabled state of the sound output processor 121 and the restriction processor 122 in the restraint processor 12. As an example, it is possible to enable the sound output processor 121 and disable the restriction processor 122, or to disable sound output processor 121 and enable the restriction processor 122. Accordingly, only a required number of the specific processes can be enabled depending on a situation, and flexibility of the restraint process is increased.

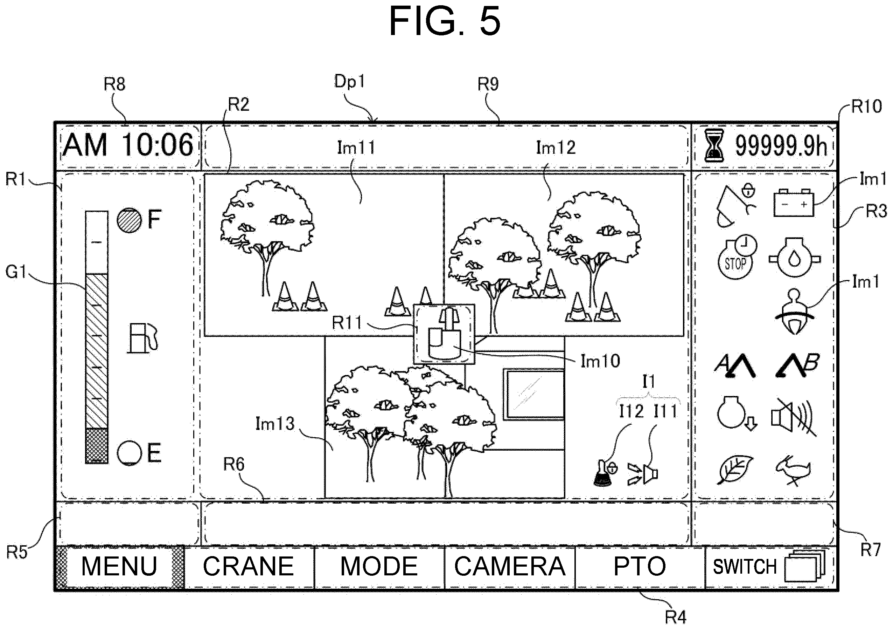

The display processor 11 executes at least a display process of displaying the display screen Dp1 on the display device 2. Specifically, the display processor 11 generates the display screen Dp1 based on data and the like acquired by the image acquisition unit 14, and controls the display device 2 so as to display the display screen Dp1 on the display unit 23 of the display device 2. Furthermore, the display processor 11 operates in response to an operation received by the operation unit 22 of the display device 2. The display processor 11 displays, for example, captured images Im11, Im12, and Im13 (see FIG. 5) captured by the left camera 341, the right camera 342 and the rear camera 343, respectively, on the display screen Dp1. In other words, the display processor 11 displays, on the display device 2, images of the monitoring area A1 around the work machine 3 (individual small areas A11, A12, and A13), which are acquired by the image acquisition unit 14.

Here, in addition to the captured images Im11, Im12, and Im13, the display processor 11 displays, on the display screen Dp1, a detection object Im10 (see FIG. 5) that represents the detection result of the presence or absence (existence or nonexistence) of the detection target Ob1 in the monitoring area A1 by the detector 15. The detection object Im10 is displayed at an identical position on the display screen Dp1 regardless of the detection result of the detector 15. Therefore, the display position of the detection object Im10 is identical in both the case where the detection target Ob1 is present in the monitoring area A1 and the case where the detection target Ob1 is not present in the monitoring area A1. In other words, the detection object Im10 is constantly displayed at a fixed position on the display screen Dp1, regardless of the detection result of the detector 15. Meanwhile, the detection object Im10 changes a display mode thereof according to the detection result of the detector 15. Therefore, the display mode of the detection object Im10 is different in the case where the detection target Ob1 is present in the monitoring area A1 and the case where the detection target Ob1 is not present in the monitoring area A1.

In other words, the display processor 11 displays, on the display device 2, the display screen Dp1 including the captured images Im11, Im12, and Im13 and the detection object Im10. In addition, the display processor 11 displays the detection object Im10 at an identical position on the display screen Dp1 regardless of the detection result of the detector 15 that detects the detection target Ob1 in the monitoring area A1, while changing the display mode of the detection object Im10 according to the detection result. The "object" referred to in the present disclosure, such as the detection object Im10, includes a mark, a graphic image, a figure, a photograph, text, or a moving image, etc., or a combination thereof, that are displayed in the display screen Dp1. Also, the "display mode" referred to in the present disclosure includes (object) display color, size (including dimension, line thickness, etc.), shape, movement state (including animation, rotation/standstill, etc.) or display pattern (including blinking pattern, etc.), or a combination thereof. In short, the display processor 11 changes the display mode, such as the display color and the like of the detection object Im10 according to the detection result of the detector 15.

In addition, in the present embodiment, the display processor 11 is capable of displaying, on the display device 2, the display screen Dp1 including restraint state information I1 (see FIG. 5), which indicates whether the function associated with the restraint process is enabled or disabled. In other words, in the case where the switching processor 13 performs switching between an enable state and a disabled state of the function associated with the restraint process, a current state (enabled/disabled state) of the function associated with the restraint process is displayed as the restraint state information I1 on the display screen Dp1. As a result, the user U1 (operator) can visually check whether the function associated with the restraint process is enabled or disabled, and can operate the work machine 3 after knowing that the function associated with the restraint process is enabled or disabled.

Here, the detector 15 is not an essential component of the control system 1. For example, the control system 1 may be configured such that a detection result of an external detector is obtained and the restraint processor 12 executes the restraint process based on the detection result.

### [3] Work Machine Control Method

Hereinafter, an example of a work machine 3's control method (hereinafter, simply referred to as a "control method") executed mainly by the control system 1 will be described with reference to FIG. 5 to FIG. 8.

The control method according to the present embodiment is executed by the control system 1, which is mainly constituted by a computer system, and in other words, the control method is embodied in a work machine control program (hereinafter, simply referred to as a "control program"). That is, the control program according to the present embodiment is a computer program that causes one or more processors to execute each of processes related to the control method. The above control program may be cooperatively executed by, for example, the control system 1 and the display device 2.

Here, when a preset specific start operation for executing the control program is performed, the control system 1 executes the following various types of processes related to the control method. Examples of the start operation include an operation of starting the engine of the work machine 3. Meanwhile, when a preset specific end operation is performed, the control system 1 ends the following various types of processes related to the control method. Examples of the end operation include an operation of stopping the engine of the work machine 3.

### [3.1] Display Screen

Herein, first, a configuration of the display screen Dp1 displayed on the display unit 23 of the display device 2 by the control method according to the present embodiment will be described. In the drawings illustrating the display screen Dp1 displayed on the display unit 23 of the display device 2, such as FIG. 5, a dashed-dotted line, a leading line, and a reference sign representing regions are each merely for an illustrative purpose and may not be actually displayed at the display device 2.

The display screen Dp1 illustrated in FIG. 5 is a home screen displayed first by the control method. The home screen is a basic display screen Dp1 that is first displayed on the display device 2 while the work machine 3 is operating. The display screen Dp1 can transition from the home screen to various display screens Dp1 including a menu screen, a crane screen, a mode screen, and a PTO screen according to an operation on the operation unit 22.

As illustrated in FIG. 5, the display screen Dp1 includes a first region R1, a second region R2, a third region R3, a fourth region R4, a fifth region R5, a sixth region R6, a seventh region R7, an eighth region R8, a ninth region R9, and a tenth region R10. In the control method according to the present embodiment, as an example, the captured images Im11, Im12, and Im13 of the monitoring area A1 (respective small areas A11, A12, and A13), the detection object Im10, the restraint state information I1, and the like are displayed in the second region R2 that occupies the majority of the display screen Dp1. The area in the second region R2 where the detection object Im10 is displayed is set as an 11th region R11.

Specifically, the display screen Dp1 is divided vertically (up-down direction) into four regions. Then, the upper three regions are further divided into three regions in the transverse direction (left-right direction). As a result, the display screen Dp1 is divided into ten regions in total. Then, the second step regions from the top include, from left to right, the first region R1, the second region R2, and the third region R3. The lowest step region is the fourth region R4. Further, the third step regions from the top include, from left to right, the fifth region R5, the sixth region R6, and the seventh region R7, and the uppermost step regions include, from left to right, the eighth region R8, the ninth region R9, and the tenth region R10. Among the four regions vertically divided, a vertical size of the second step regions (the first region R1, the second region R2, and third region R3) from the top is the largest. Among the three regions transversely divided, a transverse size of middle regions (the second region R2, the sixth region R6, and the ninth region R9) is the largest.

However, the placement and size of the respective regions are merely examples and can be properly changed. The respective regions are not essential to be clearly divided by boundary lines. For example, even in the example in FIG. 5, the second region R2 and the third region R3 are clearly divided by a boundary line, while there is no boundary line between the first region R1 and the second region R2. Of course, the first region R1 and the second region R2 may be clearly divided by a boundary line.

The first region R1 is a rectangular region extending in the vertical direction. In the first region R1, for example, remaining amount information G1 regarding the remaining amount of fuel (e.g., diesel oil) in the engine is displayed. Based on an output (sensor signal) or the like of a remaining amount sensor, the display processor 11 generates the remaining amount information G1 in the display screen Dp1.

The second region R2 is a rectangular region extending in the transverse direction. The captured images Im11, Im12, and Im13 of the monitoring area A1, the detection object Im10, the restraint state information I1, and the like are displayed in the second region R2. The captured image Im11 is an image of the small area A11, which is on the left of the driving part 321, captured by the left camera 341, and the captured image Im12 is an image of the small area A12, which is on the right of the driving part 321, captured by the right camera 342. The captured image Im13 is an image of the small area A13, which is at the rear of the driving part 321, captured by the rear camera 343. The display processor 11 displays the captured images Im11, Im12, and Im13 acquired by the image acquisition unit 14 in real time.

The detection object Im10 is displayed within the 11th region R11 set in a central portion of the second region R2. As an example in the present embodiment, the detection object Im10 is a graphic image (icon) that imitates the machine body 30 viewed from above. Therefore, an upper side of the detection object Im10 corresponds to a front side of the machine body 30 in real space, a lower side of the detection object Im10 corresponds to a rear side of the machine body 30 in the real space, a right side of the detection object Im10 corresponds to a right side of the machine body 30 in the real space, and a left side of the detection object Im10 corresponds to a left side of the machine body 30 in the real space. Specifically, a lower part of the detection object Im10 is configured in an arc shape to imitate a rear part (counterweight) of the swivel part 32, and an upper part of the detection object Im10 is configured in a shape to imitate a front part (work part 33) of the swivel part 32. In the present embodiment, the work part 33 is arranged at a position that is offset to the right relative to the center of the swivel part 32 in the left-right direction D3, and the driving part 321 is arranged at a position that is offset to the left relative to the center of the swivel part 32 in the left-right direction D3. Therefore, in the detection object Im10, a figure imitating the work part 33 is positioned in an upper right portion, and a figure imitating the driving part 321 is positioned in a left portion.

In the present embodiment, the captured images Im11, Im12, and Im13 are shaped such that the central portion of the second region R2 is cut out in a rectangular shape. Therefore, the detection object Im10, which is displayed in the central portion of the second region R2 (the 11th region R11), is positioned to fit into the cutout portion of the captured images Im11, Im12, and Im13. As a result, the detection object Im10 is arranged adjacent to the captured images Im11, Im12, and Im13 on the display screen Dp1. Therefore, it is easy for the operator to intuitively recognize a distance, or the like, between the machine body 30 and the detection target Ob1 by viewing the display screen Dp1.

Furthermore, in the present embodiment, the captured images Im11, Im12, and Im13 are displayed, corresponding to the positional relationship when the machine body 30 is viewed from above, in the following manner: the captured image Im11 is displayed at the upper left side of the detection object Im10, the captured image Im12 is displayed at the upper right side of the detection object Im10, and the captured image Im13 is displayed at the lower side of the detection object Im10. In other words, the captured image Im11 of the small area A11, which is on the left of the machine body 30, is positioned on the left relative to the detection object Im10, the captured image Im12 of the small area A12, which is on the right of the machine body 30, is positioned on the right relative to the detection object Im10, and the captured image Im13 of the small area A13, which is at the rear of the machine body 30, is positioned below the detection object Im10. Thus, in the control method according to the present embodiment, the positional relationship of the captured images Im11, Im12, and Im13 relative to the detection object Im10 on the display screen Dp1 reflects the positional relationship of the monitoring area A1 relative to the work machine 3 in the real space. Therefore, it is easy for the operator to intuitively recognize which part of the monitoring area A1 is captured in the captured images Im11, Im12, and Im13 by viewing the display screen Dp1.

In the present embodiment, the detection object Im10 is displayed based on an orientation of the swivel part 32 on which the driving part 321 is installed, rather than an orientation of the traveling part 31. In other words, as the swivel part 32 swivels relative to the traveling part 31, the direction in the real space corresponding to the upper side of the detection object Im10 changes. Accordingly, the upper side of the detection object Im10 constantly corresponds to the front side of the swivel part 32, which is the front side as seen by the operator seated in the driving part 321. Specifically, the work machine 3 includes the traveling part 31 and the swivel part 32 that is capable of swiveling with respect to the traveling part 31. In the control method according to the present embodiment, the positional relationship of the captured images Im11, Im12, and Im13 relative to the detection object Im10 on the display screen Dp1 reflects the positional relationship of the monitoring area A1 relative to the swivel part 32 in the real space. Therefore, it is easy for the operator to intuitively recognize which part of the monitoring area A1 is captured in the captured images Im11, Im12, and Im13 by viewing the display screen Dp1.

The restraint state information I1 is displayed in a lower right portion of the second region R2. As described above, the restraint state information I1 indicates whether the function associated with the restraint process is enabled or disabled, that is, a state (enabled/disabled state) of the function associated with the restraint process selected by the switching processor 13. In the present embodiment, the restraint state information I1 includes graphic images (icons). The restraint state information I1 indicates a state (enabled/disabled state) of the function associated with the restraint process, for example, by a display mode, such as a display color or a size of the graphic image. The display processor 11 determines the state (enabled/disabled state) of the function associated with the restraint process based on the operation state of the switching processor 13. Then, the display processor 11 determines a display mode of the graphic image in the restraint state information I1 in accordance with the state (enabled/disabled state) of the function associated with the restraint process.

Here, the restraint process includes a plurality of specific processes (the sound output process, the restriction process, etc.), each of which can be switched between an enabled state and a disabled state, and the restraint state information I1 is displayed for each specific process. In the example in FIG. 5, the restraint state information I1 includes first restraint state information I11 and second restraint state information I12 which individually correspond to specific processes. The first restraint state information I11 represents an enable state or a disabled state of the function associated with the sound output process, and the second restraint state information I12 represents an enable state or a disabled state of the function associated with the restriction process. The design (pattern) of each of the graphic images of the first restraint state information I11 and the second restraint state information I12 indicates the correspondence with the sound output process or the restriction process.

As an example in the present embodiment, when the function associated with the restraint process is enabled, the restraint state information I1 is displayed as an active state, and when the function associated with the restraint process is disabled, the restraint state information I1 is displayed as an inactive state. In other words, the restraint state information I1 that is displayed as an active state indicates that the function associated with the restraint process is enabled, and the restraint state information I1 that is displayed as an inactive state indicates that the function associated with the restraint process is disabled. The active restraint state information I1 is displayed in a high-contrast display color, such as green, whereas the inactive restraint state information I1 is displayed in a low-contrast display color, such as gray, for example.

The third region R3 is a rectangular region extending in the vertical direction. In the third region R3, graphic images (icons) Im1 corresponding to operating states of respective components of the work machine 3 are displayed. In the third region R3, a plurality of the graphic images Im1 may be displayed, and a design (pattern) of each of the graphic images Im1 indicates which state of a battery, a seat belt, a cooling water temperature, a hydraulic oil temperature, and the like is represented, for example. Here, each of the graphic images Im1 indicates an operating state by, for example, a display mode, such as a display color or a size. The display processor 11 determines the state of each part of the work machine 3 using outputs of the various sensors (including the cooling water temperature sensor and the hydraulic oil temperature sensor) that detect the operating state of each part of the work machine 3. When an abnormal value is detected in any site, the display processor 11 performs warning display by changing the display mode, such as a display color, of the graphic image Im1 of the site.

The fourth region R4 is a band-shaped region that extends over an entire width of the display screen Dp1. The fourth region R4 displays items for operation on the display screen Dp1. In FIG. 5, six items including "Menu", "Crane", "Mode", "Camera", "PTO", and "Switch" are placed in this order from left in the fourth region R4, as an example. The six push button switches 221 to 226 of the operation unit 22 positioned right below the six items are associated with the six items, respectively. For example, the item "Menu" is associated with the push button switch 221, and the item "Crane" is associated with the push button switch 222. Therefore, when the push button switch 224 associated with the item "Camera" is operated by the user U1 (see FIG. 4), the item "Camera" is operated (selected).

Further, in the present embodiment, any of the items is highlighted in the fourth region R4 so as to correspond to an operation of an operation dial (or a cursor key) of the operation unit 22. The item "Menu" is highlighted in the example of FIG. 5, and the highlighted item is switched by operating the operation dial (or the cursor key). The user U1 can select a desired item by operating a determination button in a state where the desired item is highlighted. Therefore, for example, when the determination button is operated in a state where the item "Camera" is highlighted, the item "Camera" is operated (selected). Furthermore, when the operation unit 22 includes a touch panel, the user U1 can select a desired item by touching the desired item on the display screen Dp1.

In the fifth region R5, a warning display graphic image (icon) is displayed to indicate that an abnormal value is detected by the various sensors (including the cooling water temperature sensor and the hydraulic oil temperature sensor). In the sixth region R6, for example, information on the work part 33 that is operating in the work machine 3 is displayed. In the seventh region R7, for example, information on the operating state of the work machine 3, such as an engine speed, is displayed. In the eighth region R8, for example, a current time is displayed. In the ninth region R9, for example, information indicating an item to which the currently displayed display screen Dp1 belongs is displayed. In the tenth region R10, for example, information on an operating time (hour meter) of the work machine 3 is displayed.

### [3.2] Details

Next, the control method according to the present embodiment will be described in detail.

The control method according to the present embodiment includes acquiring the captured images Im11, Im12, and Im 13 of the monitoring area A1 around the work machine 3 (image acquisition process), and displaying the display screen Dp1 including the captured images Im11, Im12, and Im13 and the detection object Im10 on the display device 2 (display process). The control method further includes, in the display process, displaying the detection object Im10 at an identical position on the display screen Dp1 regardless of the detection result of the detector 15 that detects the detection target Ob1 in the monitoring area A1, while changing the display mode of the detection object Im10 according to the detection result.

In short, the display screen Dp1 including the captured images Im11, Im12, and Im13 and the detection object Im10 is displayed on the display device 2, so that the detection result of the detection target Ob1 in the monitoring area A1 can be represented by the display mode of the detection object Im10. Moreover, although the display mode of the detection object Im10 changes, the display position thereof is at a fixed position on the display screen Dp1 regardless of the detection result of the detector 15, which results in good visibility. Therefore, for the operator (user U1), it is possible to recognize the detection result of the detection target Ob1 in the monitoring area A1 simply by viewing the detection object Im10 that is displayed at a fixed position on the display screen Dp1. Accordingly, the control method according to the present embodiment makes it easier for the operator to intuitively recognize that the detection target Ob1 (for example, a person) is present in the monitoring area A1.

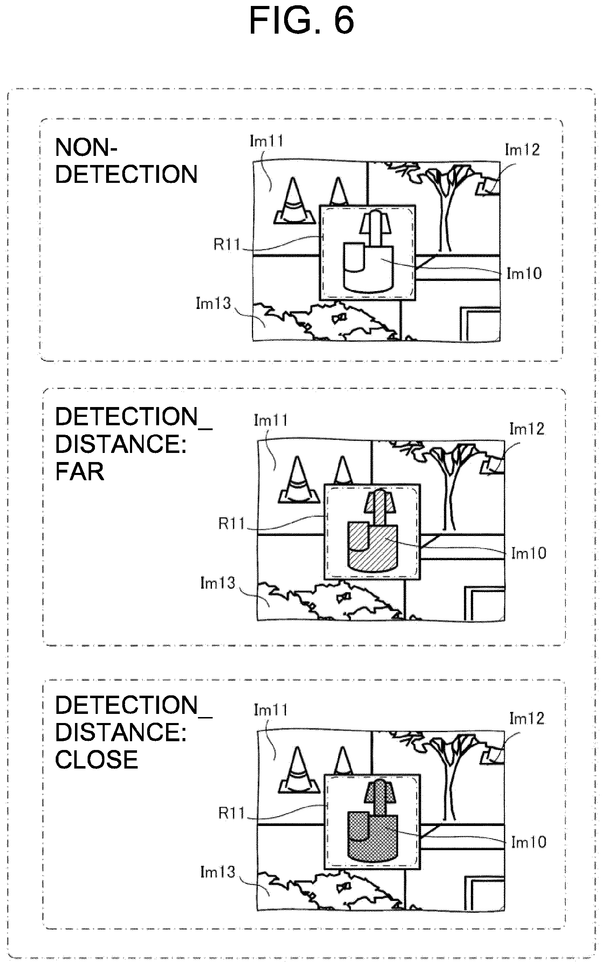

FIG. 6 illustrates examples of the display mode of the detection object Im10. In FIG. 6, only the area around the 11th region R11 in the display screen Dp1 is illustrated, and other illustrations are omitted. Since the display mode of the detection object Im10 changes according to the detection result of the detector 15, there are at least two display modes: a display mode during "non-detection", in which the detection target Ob1 is not present in the monitoring area A1, and a display mode during "detection", in which the detection target Ob1 is present in the monitoring area A1. Furthermore, in the present embodiment, the display mode of the detection object Im10 changes depending on the distance from the work machine 3 to the detection target Ob1. Therefore, even in the case of "detection", in which the detection target Ob1 is present in the monitoring area A1, the display mode of the detection object Im10 is further different between a case where the distance from the work machine 3 to the detection target Ob1 is far (detection_distance: far) and a case where the distance from the work machine 3 to the detection target Ob1 is close (detection_distance: close). Therefore, as illustrated in FIG. 6, the detection object Im10 has three display modes: "non-detection", "detection_distance: far" and "detection_distance: close". Here, it is assumed that the detector 15 judges "detection_distance: close" if the distance from the work machine 3 to the detection target Ob1 is within a threshold distance (e.g., 2 m), and judges "detection_distance: far" if the distance from the work machine 3 to the detection target Ob1 exceeds the threshold distance.

As an example in the present embodiment, the display mode of the detection object Im10, which changes according to the detection result of the detector 15, includes the display color of the detection object Im10. Therefore, the display color of the detection object Im10 on the display screen Dp1 will change according to the detection results of the detector 15. For example, the closer the detection target Ob1 is to the machine body 30, the more conspicuous the display color of the display mode of the detection object Im10 becomes. As an example, when the detection target Ob1 moves closer to the machine body 30, the display color of the detection object Im10 changes from yellow to red. Specifically, as illustrated in FIG. 6, the display color of detection object Im10 is identical to the background color (black, white, etc.) in the case of "non-detection", yellow in the case of "detection_distance: far" and red in the case of "detection_distance: close". Therefore, it is easier for the operator to intuitively recognize that the detection target Ob1 (for example, a person) is present in the monitoring area A1 by the display color of the detection object Im10, which is displayed in the fixed position (the 11th region R11) of the display screen Dp1.

Here, there may be a plurality of the detection targets Ob1 in the monitoring area A1 simultaneously. In this case, the display mode of the detection object Im10 is determined according to the distance from the machine body 30 of the work machine 3 to the closest detection target Ob1 among the plurality of detection targets Ob1. For example, if the detection target Ob1 that is present at a position within the threshold distance from the work machine 3, and the detection target Ob1 that is present at a position farther than the threshold distance from the work machine 3, are detected simultaneously, the display color of the detection object Im10 is red based on the detection target Ob1 that is present at a position within the threshold distance from the work machine 3. In short, the display mode of the detection object Im10 changes according to the distance from the work machine 3 to the detection target Ob1. The control method according to the present embodiment determines the display mode of the detection object Im10 according to the distance from the work machine 3 to the closest detection target Ob1 when a plurality of the detection targets Ob1 is present in the monitoring area A1. This makes it easier for the operator to intuitively recognize the detection result because the display mode of detection object Im10 is determined according to the detection result of the most urgent detection target Ob1.

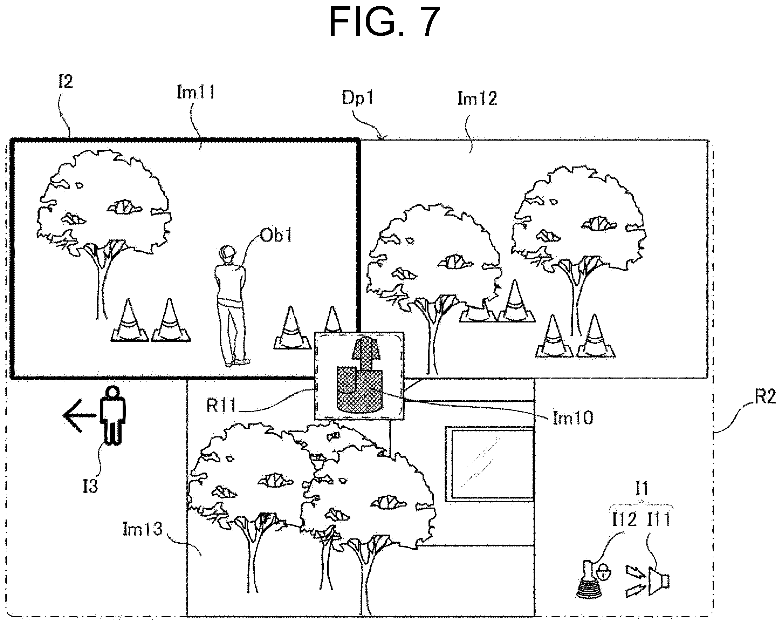

By the way, in the present embodiment, since the detection target Ob1 in the monitoring area A1 is a target to be detected by the detector 15, if the detection target Ob1 is present in the monitoring area A1, the detection target Ob1 is naturally reflected in the captured images Im11, Im12, and Im13 of the monitoring area A1. In other words, as illustrated in FIG. 7, when the detection target Ob1 is reflected in the captured images Im11, Im12, and Im13 on the display screen Dp1, the display mode of the detection object Im10 indicates that the detection target Ob1 is present in the monitoring area A1. In FIG. 7, only the second region R2 of the display screen Dp1 is illustrated, and regions other than the second region R2 are omitted.

Thus, when the detection result indicates the presence of the detection target Ob1 in the monitoring area A1, at least a part of the detection target is reflected in the captured images Im11, Im12, and Im13 on the display screen Dp1. This makes it possible for the operator to check the detection target Ob1 on the captured images Im11, Im12, and Im13. Thus, the operator (user U1) can check, on the display screen Dp1 displayed on the display device 2, the situations at the work machine 3's sides and rear which are likely to be blind spots from the driving part 321. Therefore, when compared with the configuration in which only the detection object Im10 is displayed, when the detection target Ob1 is present in the monitoring area A1, it is easier to recognize in detail, on the display screen Dp1, the situation of the detection target Ob1.

Here, in the present embodiment, as illustrated in FIG. 7, the display screen Dp1 includes auxiliary objects I2 and I3 indicating detection results of the detector 15. The auxiliary object I2 is a band-shaped (frame-shaped) graphic image that displays, among the captured images Im11, Im12, and Im13, the captured image including the detection target Ob1 in an emphasized manner. The auxiliary object I3 is a graphic image indicating a direction in which the detection target Ob1 is present as seen from the driving part 321. The example in FIG. 7 assumes a case where the detection target Ob1 (herein, "person") is present in the small area A11 that is captured by the left camera 341 and that is on the left of the driving part 321. Therefore, among the captured images Im11, Im12, and Im13, the captured image Im11 is displayed in an emphasized manner by the auxiliary object I2, and the auxiliary object I3 indicating that the detection target Ob1 is present on the left of the driving part 321 is displayed below the captured image Im11.

Similar to the detection object Im10, the display mode of the auxiliary objects I2 and I3 is also preferably changed according to the position of the detection target Ob1 in the monitoring area A1. For example, the display mode of the auxiliary objects I2 and I3, such as display color, size (including dimension, line thickness, etc.), shape, movement state (including animation, rotation/standstill, etc.) or display pattern (including blinking pattern, etc.), is changed depending on the position of the detection target Ob1 in the monitoring area A1. Specifically, the closer the detection target Ob1 is to the machine body 30, the more conspicuous the display color of the display mode of the auxiliary objects I2 and I3 becomes. For example, when the detection target Ob1 moves closer to the machine body 30, the display color of the auxiliary objects I2 and I3 changes from yellow to red.

In the present embodiment, in particular, the display color of the auxiliary objects I2 and I3 is identical to the display color of the detection object Im10. In other words, the display color of the auxiliary objects I2 and I3 is also yellow in the case of "detection_distance:far" and red in the case of "detection_distance: close". Note that, unlike the detection object Im10, the auxiliary objects I2 and I3 are only displayed when the detection target Ob1 is present in the monitoring area A1, but are not displayed when the detection target Ob1 is not present in the monitoring area A1.

Thus, the control method according to the present embodiment further includes displaying the auxiliary objects I2 and I3, which are different from the detection object Im10, on the display screen Dp1 when the detection result indicates the presence of the detection target Ob1 in the monitoring area A1. In other words, when the detection target Ob1 is present in the monitoring area A1, the display screen Dp1 not only displays the captured images Im11, Im12, and Im13 of the monitoring area A1 and the detection object Im10, but also displays the auxiliary objects I2 and I3, which are different from the detection object Im10. Therefore, the operator can easily check the existence or nonexistence (presence or absence) of the detection target Ob1 in the monitoring area A1 by viewing the display screen Dp1.

In addition, the auxiliary objects I2 and I3 indicate at least the direction in which the detection target Ob1 is present as seen from the work machine 3. As an example, the captured images Im11, Im12, and Im13 include images of the plurality of small areas A11, A12, and A13 included in the monitoring area A1. Then, in the display screen Dp1, the auxiliary object I2 causes the image of the small area where the detection target Ob1 is present among the plurality of small areas A11, A12, and A13 to be displayed in an emphasized manner. In other words, the captured image including the detection target Ob1 among the captured images Im11, Im12, and Im13 is displayed in an emphasized manner by the auxiliary object I2. This allows the operator to easily recognize, when the detection target Ob1 is present in the monitoring area A1, the detection target Ob1 is present in which of the plurality of small areas A11, A12, A13.

Furthermore, the display mode of detection object Im10 includes the display color of the detection object Im10, and the display color of the auxiliary objects I2 and I3 is identical to the display color of the detection object Im10 when the detection result indicates the presence of detection target Ob1 in monitoring area A1. In other words, when the detection target Ob1 is present in the monitoring area A1, the auxiliary objects I2 and I3 are displayed in an identical color to the detection object Im10. Thus, it is easier for the operator to view the auxiliary objects I2 and I3 and the detection object Im10.

Here, the detection object Im10 and the auxiliary objects I2 and I3 are displayed not only when the function associated with the restraint process is enabled but also when the function associated with the restraint process is disabled. In other words, even in a state where the restraint processor 12 is disabled and both the first restraint state information I11 and the second restraint state information I12 are displayed inactive by being grayed out, if the detection target Ob1 is present in the monitoring area A1, the detection object Im10 and the auxiliary objects I2 and I3 are displayed.

### [3.3] Overall Process

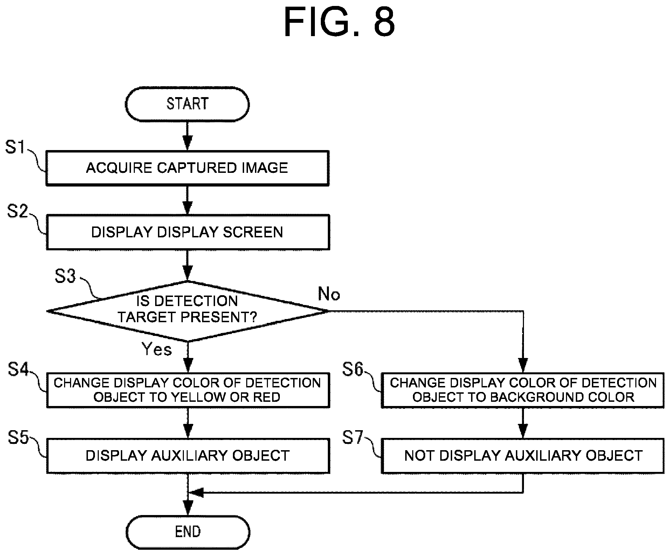

Next, the overall flow of processes related to the control method will be described with reference to FIG. 8. FIG. 8 is a flowchart illustrating an example of a process related to the control method.

As illustrated in FIG. 8, the image acquisition unit 14 of the control system 1 acquires the captured images Im11, Im12, and Im13 from the left camera 341, the right camera 342, and the rear camera 343 (S1). Then, the display processor 11 of the control system 1 displays the display screen Dp1 including the captured images Im11, Im12, and Im13 and the detection object Im10 on the display device 2 (S2).

Here, the display processor 11 of the control system 1 determines whether or not the detection target Ob1 is present in the monitoring area A1 based on the detection result of the detector 15 (S3). If the detection target Ob1 is present in the monitoring area A1 (S3: Yes), the display processor 11 changes the display color (display mode) of the detection object Im10 in the display screen Dp1 to the display color during detection (yellow or red) (S4). Furthermore, the display processor 11 displays the auxiliary objects I2 and I3 on the display screen Dp1 (S5).

On the other hand, if the detection target Ob1 is not present in the monitoring area A1 (S3: No), the display processor 11 changes the display color (display mode) of the detection object Im10 in the display screen Dp1 to the display color during non-detection (background color) (S6). Furthermore, the display processor 11 hides the auxiliary objects I2 and I3 on the display screen Dp1 (S7).

The control system 1 repeatedly executes the processes in step S1 to step S7 described above. As a result, the display screen Dp1 according to the detection result of the detector 15 is displayed on the display device 2. Note that, the flowchart illustrated in FIG. 8 is merely one example; thus, the process may be properly added or omitted, and the order of the processes may be properly replaced.

### [4] Modified Examples

Hereinafter, the modified examples of the first embodiment will be described. The modified examples described below can be applied in combination as appropriate.

The control system 1 according to the present disclosure includes a computer system. The computer system includes, as main components, one or more processors and one or more storages as hardware. The processor, by executing the program recorded in the storage of the computer system, realizes the function as the control system 1 in the present disclosure. The program may be preliminarily recorded in the storage of the computer system, may be provided through an electric communication line, or may be provided in a manner to be recorded in a non-transitory recording medium, such as a memory card, an optical disk, a hard disk drive, or the like, each of which is readable by the computer system. Furthermore, some of or all the functional units included in the control system 1 may be configured by an electronic circuit.

A configuration in which at least a part of the functions of the control system 1 is integrated in one housing is not essential for the control system 1, and the components of the control system 1 may be provided in a plurality of housings in a distributed manner. Conversely, in the first embodiment, functions that are distributed to a plurality of devices (for example, the control system 1 and the display device 2) be integrated in one housing. Furthermore, at least a part of the functions of the control system 1 may be realized by a cloud (cloud computing) or the like.

Further, the power source of the work machine 3 is not limited to a diesel engine, but may be, for example, an engine other than the diesel engine, a motor (electric motor), or a hybrid power source that includes the engine and the motor (electric motor).

Further, the display device 2 is not limited to a dedicated device, but may be a general-purpose terminal such as a laptop computer, a tablet terminal, or a smartphone. Further, the display unit 23 is not limited to a mode that directly displays a display screen, such as a liquid crystal display or an organic EL display, but may be a configuration that displays the display screen by projection, such as a projector.

Further, as a mode for inputting information of the operation unit 22, a mode other than the push button switch, the touch panel, and the operation dial may be employed. For example, the operation unit 22 may employ any mode such as a keyboard, a pointing device such as mouse, a voice input, a gesture input, or inputting an operation signal from another terminal.

The restriction process executed by the restriction processor 122 may be any process that restricts a movement of the work machine 3, and is not limited to a process that prohibits (disables) the movement (such as the swivel movement) of the work machine 3. The restriction process may be, for example, a process to reduce a speed of a movement (such as the swivel movement) of the work machine 3, narrow a movement range (such as a swiveling angle) of the work machine 3, or restrict an allowable area of the movement of the work machine 3.

Furthermore, the restraint process may not include a plurality of specific processes (such as the sound output process and the restriction process) to restrain a movement of the work machine 3. Even when the restraint process includes a plurality of specific processes, the specific processes may not be individually switched from an enabled state to a disabled state, and the plurality of specific processes may be switched from an enabled state to a disabled state in a batched manner. The restraint state information I1 may not indicate whether each of the specific processes is in an enabled state or a disabled state. Furthermore, it is not essential to display, when the function associated with the restraint process is disabled, the fact that the function associated with the restraint process is disabled as the restraint state information I1. When the function associated with the restraint process is disabled, for example, the restraint state information I1 may be hidden.

In addition, the function associated with the restraint process by the restraint processor 12 is not an essential function, and the restraint processor 12 can be omitted as appropriate. Furthermore, it is not essential to display the restraint state information I1, and the restraint state information I1 may be hidden regardless of the enable/disable state of the function associated with the restraint process.

Further, the sensors for detecting the detection target Ob1 in the monitoring area A1 around the work machine 3 are not limited to the left camera 341, the right camera 342 and the rear camera 343, but may be one, two, or four or more cameras (image sensors). Furthermore, for example, a camera capable of capturing images in all directions seen from the work machine 3, such as an entire celestial sphere camera (360-degree camera), may be used to detect the detection target Ob1 in the monitoring area A1. The sensors for detecting the detection target Ob1 in the monitoring area A1 may include, in addition to or instead of the cameras, for example, sensors, such as a motion sensor, a sonar sensor, a radar or Light Detection and Ranging (LiDAR). Here, the sensor for detecting the detection target Ob1 in the monitoring area A1 may be a three-dimensional sensor that measures a distance to the detection target Ob1 by a time of flight (TOF) method, which measures a distance to a distance measurement point based on the round trip time taken by light or sound to reach the distance measurement point and return from the distance measurement point.

Further, the detection target Ob1 may include, in addition to or instead of a "person", a mobile object such as a vehicle (including other work machines), a structure such as a wall and a pillar, a plant, an animal, a step, a groove, or other obstacles.

When the detection result indicates the presence of the detection target Ob1 in the monitoring area A1, it is not essential that at least a part of the detection target Ob1 is reflected in the captured images Im11, Im12, and Im13 on the display screen Dp1. In addition, it is not essential that the detection object Im10 is arranged adjacent to the captured images Im11, Im12, and Im13 on the display screen Dp1. For example, the detection object Im10 may be superimposed on the captured images Im11, Im12, and Im13 on the display screen Dp1.

It is not essential that the positional relationship of the captured images Im11, Im12, and Im13 relative to the detection object Im10 on the display screen Dp1 reflects the positional relationship of the monitoring area A1 relative to the work machine 3 in the real space. Furthermore, it is not essential that the positional relationship of the captured images Im11, Im12, and Im13 relative to the detection object Im10 on the display screen Dp1 reflects the positional relationship of the monitoring area A1 relative to the swivel part 32 in the real space.

In addition, it is not essential that displaying the auxiliary objects I2 and I3, which are different from the detection object Im10, on the display screen Dp1 when the detection result indicates the presence of the detection target Ob1 in the monitoring area A1. Furthermore, it is not essential that the auxiliary objects I2 and I3 indicate at least the direction in which the detection target Ob1 is present as seen from the work machine 3. Furthermore, it is not essential that the display color of the auxiliary objects I2 and I3 is identical to the display color of the detection object Im10 when the detection result indicates the presence of detection target Ob1 in monitoring area A1.

In addition, it is not essential to determine the display mode of the detection object Im10 according to the distance from the work machine 3 to the closest detection target Ob1 when a plurality of the detection targets Ob1 is present in the monitoring area A1. Furthermore, it is not essential that the display mode of the detection object Im10 changes according to the distance from the work machine 3 to the detection target Ob1.

### (Second Embodiment)

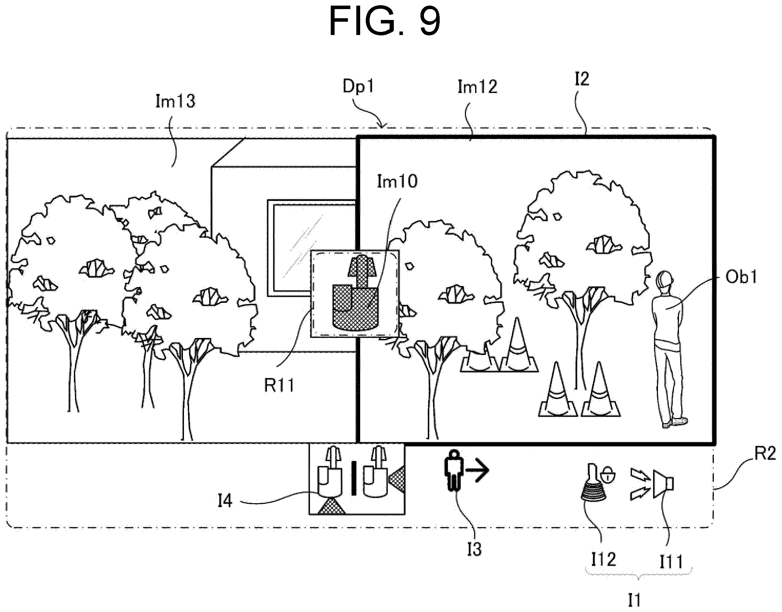

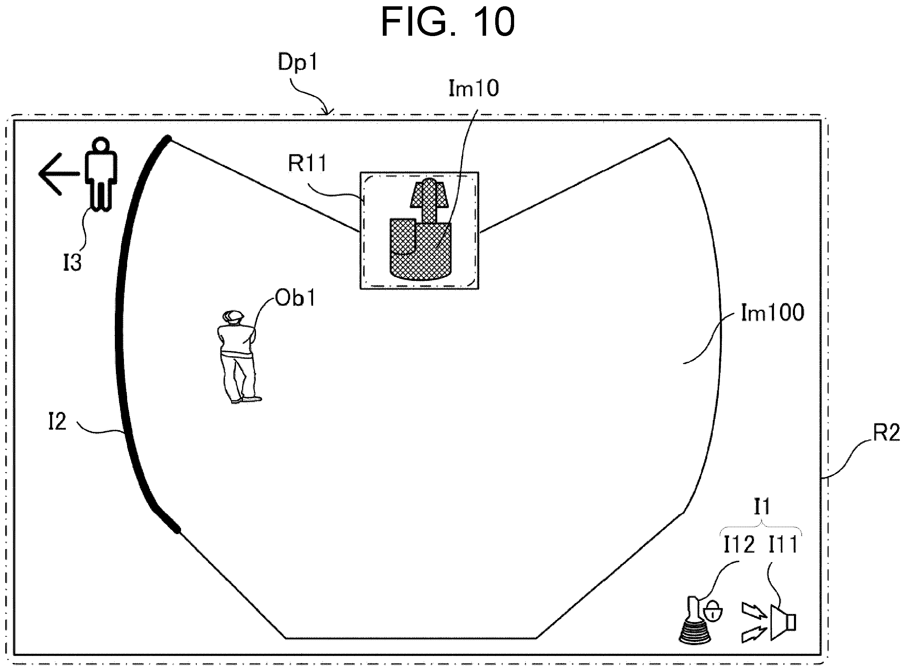

As illustrated in FIGS. 9 and 10, a work machine 3 according to the present embodiment is different from the work machine 3 according to first embodiment in display content of a second region R2 of a display screen Dp1. Hereinafter, the same components as those in the first embodiment will be denoted by the same reference signs, and the description thereof will be properly omitted. In FIGS. 9 and 10, only the second region R2 of the display screen Dp1 is illustrated, and regions other than the second region R2 are omitted.

In the example in FIG. 9, the second region R2 displays two screens, that is, among captured images Im11, Im12, and Im13 of a monitoring area A1 (see FIG. 7), the image Im12 captured by the right camera 342 and the image Im13 captured by the rear camera 343. In this example, the captured images Im12 and Im13 are placed side by side in the left-right direction in the second region R2, and an icon 14 is displayed below the captured images Im12 and Im13. The icon I4 schematically illustrates a positional relationship between the imaging ranges (small areas A12 and A13) of the right camera 342 and the rear camera 343 as seen from the machine body 30.

The detection object Im10 is arranged in a central portion of the captured images Im11 and Im12 in the example in FIG. 9. However, the present disclosure is not limited to this example, the detection object Im10 may be arranged, for example, above the captured image Im11 or the captured image Im12.

In the example in FIG. 10, an overhead image Im100 of the monitoring area A1 is displayed in the second region R2. The overhead image Im100 is a type of captured image generated by performing coordinate transform on the captured images Im11, Im12, and Im13 of the left camera 341, the right camera 342, and the rear camera 343, respectively, and combining the captured images Im11, Im12, and Im13. Even in this overhead image Im100, the auxiliary object I2 is a band-shaped (frame-shaped) graphic image displaying a small area where the detection target Ob1 is present in an emphasized manner. The overhead image Im100 may be obtained by compositing captured images into an animation.

The detection object Im10 is arranged at an apex angle portion of the overhead image Im100 in the example in FIG. 10. In other words, the overhead image Im100 is a fan-shaped image with an arc-shaped contour on far sides from the machine body 30, and the detection object Im10 is arranged at a position corresponding to an apex angle of the fan-shaped image. The "arc-shaped" referred to in the present disclosure is not limited to arcs that form part of a perfect circle, but includes all curved lines that are convex outwardly. Therefore, as illustrated in FIG. 10, although the contour line of the overhead image Im100 includes curved lines that are convex outward as a whole, the overhead image Im100 can be considered as a fan-shaped image with an arc-shaped contour. In other words, on the display screen Dp1, the captured image (overhead image Im100) is displayed in a state in which the contour thereof is formed into an arc shape at least for the monitoring area A1 at the left, right and rear of the work machine 3, and the detection object Im10 is arranged at the position corresponding to the apex angle of the captured image (overhead image Im100). This makes it easier for the operator to intuitively recognize the position of the detection target Ob1. However, the present disclosure is not limited to this example, the detection object Im10 may be arranged at a position other than the apex angle of the overhead image Im100, for example, below the overhead image Im100.

The two-screen display as illustrated in the present embodiment (see FIG. 9) and the overhead image Im100 (see FIG. 10) may be arbitrarily switchable by operating an operation unit 22 of a display device 2. In this case, it is preferable that a user U1 can select an arbitrary display format including the three-screen display described in the first embodiment (see FIG. 7).

The configuration (including the modified example) according to the second embodiment can be adopted in proper combination with the various configurations (including the modified examples) described in the first embodiment.

### [Appendices to the Invention]

Appended below is a summary of the invention extracted from the embodiments described above. The configurations and processing functions described in the appendices below may be selected and arbitrarily combined.

### <Appendix 1>

A work machine control method includes: acquiring a captured image of a monitoring area around a work machine; displaying a display screen including the captured image and a detection object, on a display device; and displaying the detection object at an identical position on the display screen regardless of a detection result of a detector that detects a detection target in the monitoring area, while changing a display mode of the detection object according to the detection result.

### <Appendix 2>

The work machine control method according to Appendix 1, wherein when the detection result indicates a presence of the detection target in the monitoring area, at least a part of the detection target is reflected in the captured image on the display screen.

### <Appendix 3>

The work machine control method according to Appendix 1 or 2, wherein the detection object is arranged adjacent to the captured image on the display screen.

### <Appendix 4>

The work machine control method according to any one of Appendices 1 to 3, wherein a positional relationship of the captured image relative to the detection object on the display screen reflects a positional relationship of the monitoring area relative to the work machine in real space.

### <Appendix 5>

The work machine control method according to any one of Appendices 1 to 4, wherein the work machine includes a traveling part and a swivel part that is capable of swiveling with respect to the traveling part, and a positional relationship of the captured image relative to the detection object on the display screen reflects a positional relationship of the monitoring area relative to the swivel part in real space.

### <Appendix 6>

The work machine control method according to any one of Appendices 1 to 5, further includes displaying, on the display screen, an auxiliary object different from the detection object when the detection result indicates the presence of the detection target in the monitoring area.

### <Appendix 7>

The work machine control method according to Appendix 6, wherein the auxiliary object indicates at least a direction in which the detection target is present as seen from the work machine.

### <Appendix 8>

The work machine control method according to Appendix 6 or 7, wherein the display mode of the detection object includes a display color of the detection object, and a display color of the auxiliary object is identical to the display color of the detection object when the detection result indicates the presence of the detection target in the monitoring area.

### <Appendix 9>

The work machine control method according to any one of Appendices 1 to 8, wherein the display mode of the detection object changes according to a distance from the work machine to the detection target, and when a plurality of the detection targets are present in the monitoring area, the display mode of the detection object is determined according to a distance from the work machine to a closest detection target.

### <Appendix 10>

The work machine control method according to any one of Appendices 1 to 9, wherein on the display screen, the captured image is displayed in a state where a contour thereof is formed into an arc shape at least for the monitoring area at left, right and rear of the work machine, and the detection object is arranged at a position corresponding to an apex angle of the captured image.

### <Appendix 11>

A work machine control program that causes one or more processors to execute the work machine control method according to any one of Appendices 1 to 10.

### REFERENCE SIGNS LIST

1: Work machine control system
2: Display device
3: Work machine
11: Display processor
14: Image acquisition unit
15: Detector
30: Machine body
31: Traveling part
32: Swivel part
A1: Monitoring area
Dp1: Display screen
I2, 13: Auxiliary object
Im10: Detection object
Im11, Im12, Im13: Captured image
Im100: Overhead image (captured image)
Ob1: Detection target

## Claims

1. A work machine control method comprising:
acquiring a captured image of a monitoring area around a work machine;
displaying a display screen including the captured image and a detection object, on a display device; and
displaying the detection object at an identical position on the display screen regardless of a detection result of a detector that detects a detection target in the monitoring area, while changing a display mode of the detection object according to the detection result.

2. The work machine control method according to claim 1, wherein
when the detection result indicates a presence of the detection target in the monitoring area, at least a part of the detection target is reflected in the captured image on the display screen.

3. The work machine control method according to claim 1 or 2, wherein
the detection object is arranged adjacent to the captured image on the display screen.

4. The work machine control method according to claim 1 or 2, wherein
a positional relationship of the captured image relative to the detection object on the display screen reflects a positional relationship of the monitoring area relative to the work machine in real space.

5. The work machine control method according to claim 1 or 2, wherein
the work machine includes a traveling part and a swivel part that is capable of swiveling with respect to the traveling part, and
a positional relationship of the captured image relative to the detection object on the display screen reflects a positional relationship of the monitoring area relative to the swivel part in real space.

6. The work machine control method according to claim 1 or 2, further comprising:
displaying, on the display screen, an auxiliary object different from the detection object when the detection result indicates a presence of the detection target in the monitoring area.

7. The work machine control method according to claim 6, wherein
the auxiliary object indicates at least a direction in which the detection target is present as seen from the work machine.

8. The work machine control method according to claim 6, wherein
the display mode of the detection object includes a display color of the detection object, and a display color of the auxiliary object is identical to the display color of the detection object when the detection result indicates the presence of the detection target in the monitoring area.

9. The work machine control method according to claim 1 or 2, wherein
the display mode of the detection object changes according to a distance from the work machine to the detection target, and
when a plurality of the detection targets are present in the monitoring area, the display mode of the detection object is determined according to a distance from the work machine to a closest detection target.

10. The work machine control method according to claim 1 or 2, wherein
on the display screen, the captured image is displayed in a state where a contour thereof is formed into an arc shape at least for the monitoring area at left, right and rear of the work machine, and the detection object is arranged at a position corresponding to an apex angle of the captured image.

11. A work machine control program that causes one or more processors to execute the work machine control method according to claim 1 or 2.

12. A work machine control system comprising:
an image acquisition unit that acquires a captured image of a monitoring area around a work machine; and
a display processor that displays a display screen including the captured image and a detection object, on a display device,
wherein the display processor displays the detection object at an identical position on the display screen regardless of a detection result of a detector that detects a detection target in the monitoring area, while changing a display mode of the detection object according to the detection result.

13. A work machine comprising:
the work machine control system according to claim 12; and
a machine body on which the display device is installed.
